# EUROPEAN PATENT APPLICATION

(11) **EP 2 779 538 A1**
(43) Date of publication of application: **17.09.2014**
(21) Application number: 14159564.5
(22) Date of filing: 13.03.2014
(51) Int. Cl.: H04L 12/58, H04L 12/18

(54) **Method and apparatus for managing chat sessions in a contact center**

(30) Priority: 15.03.2013 US 201313837823
(71) Applicant: Mitel Networks Corporation, Ottawa, ON K2K 2W7 (CA)
(72) Inventor: Gaetano Jr, Arthur Louis, Chandler, AZ Arizona 85248 (US); Wodzinski, Vanessa Clark, Mesa, AZ Arizona 85202 (US)
(74) Representative: McDougall, James

(57) **Abstract**

A network call center system has a Unified Communication and Collaboration (UCC) device coupled to a communication network for managing incoming and outgoing calls. The UCC device connects a first user with a second user. The UCC device generates a screen on a communication device of the second user wherein the screen having a chat window to display communication between the first user and the second user. The screen further has a first function icon which when selected allows a third user to see the chat window and the communication between the first user and the second user.

## Description

### Technical Field

This application generally relates to a contact center, and more particularly, to a system and method which allows for a party to monitor chat sessions and for the seamless transfer of a chat between parties in a contact center type system.

### Background

Many companies offer contact centers where consumers may contact the company for customer service. For example, a company may have a website. The company website may have a support page where the customer may be given several options for customer support. The website may allow the customer the option to call, send an email or have a chat session with a customer representative. The matching of incoming calls and or chat sessions between customers and agents is typically performed by software. When a call and or chat session is made to a contact center, the consumer may be asked a plurality of questions. Based on this information, the software in the call center can access a database server to determine who is best able to handle the call and or chat session based on predefined criteria (e.g., language skill, knowledge of products the caller bought, etc.). The software immediately transfers relevant information to a computer screen and or communication device of the assigned agent. Thus, the agent can gain valuable information about the customer prior to receiving the call and or chat session. As a result, the agent can more effectively handle the transaction.

Presently, it is difficult for a supervisor to assist and or monitor an agent who may be handling a chat session. This may create several issues. For example, if an agent is in need of assistance from a supervisor, the agent generally needs to open up a new chat window on the agent's computer to chat with the supervisor. If the supervisor needs to review part of the chat session between the agent and the customer, the agent generally has to cut and paste a copy of the chat history from the agent's chat window with the caller into the new chat window with the supervisor. This is not only burdensome but if the agent does not copy the entire conversation between the agent and customer, the supervisor may see a partial view of the issues.

As another example, if a supervisor notices that an agent is spending a longer than usual amount of time on a chat session, the supervisor may have to open up a new chat window with the agent to chat with the agent to see why the chat session is taking longer than usual. Thus the agent may then have multiple chat windows open on his computer. Further, if the supervisor needs to review part of the conversation between the agent and the customer, the agent generally has to cut and paste a copy of the chat history from the agent's chat window with the customer into the new chat window with the supervisor. This is not only burdensome but if the agent does not copy the entire conversation between the agent and customer, the supervisor may see a partial view of the issues.

Another problem with current contact center systems is that a trainer and or supervisor need to sit with an agent in order to train, monitor and or edit chats. Presently, there is no way to record and or save this type of information to be played back at different locations or to have the trainer and or supervisor train the agent remotely.

Therefore, a need existed to provide a system and method to overcome the above problems. The system and method would provide agent help, silent monitoring, training functionality and other features using a Unified Communication and Collaboration (UCC) contact center application that integrates presence, chat, collaboration and phone functionality.

### Summary of the Invention

A contact center system has a Unified Communication and Collaboration (UCC) device coupled to a communication network for managing incoming and outgoing calls. The UCC device connects a first user with a second user. The UCC device generates a screen on a communication device of the second user wherein the screen having a chat window to display communication between the first user and the second user. The screen further has a first function icon which when selected allows a third user to see the chat window and the communication between the first user and the second user.

A contact center system has a Unified Communication and Collaboration (UCC) device coupled to a communication network for managing incoming and outgoing calls. The UCC device comprises: a database for storing communications performed on the call center system; at least one processor; and a memory operatively coupled to the processor, the memory storing program instructions that when executed by the processor, causes the processor to: connect a first user with a second user; generating a screen on a communication device of the second user, the screen having a chat window to display communication between the first user and the second user, the screen further having a plurality of function icons; and display the chat window and the communication between the first user and the second user on a communication device of a third user and allow the third user is able to communicate privately with the second user on the chat window when a first function icon is selected.

In a contact center communication system, a computer-implemented method for managing communications comprising: connect a first user with a second user; generating a screen on a communication device of the second user, the screen having a chat window to display communication between the first user and the second user, the screen further having a plurality of function icons; and display the chat window and the communication between the first user and the second user on a communication device of a third user and allow the third user to communicate privately with the second user on the chat window when a first function icon is selected.

The features, functions, and advantages may be achieved independently in various embodiments of the disclosure or may be combined in yet other embodiments.

### Brief Description of Drawings

The novel features believed to be characteristic of the application are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The application itself, however, as well as a preferred mode of use, further objectives and advantages thereof, will be best understood by reference to the following detailed description of illustrative embodiments when read in conjunction with the accompanying drawings, wherein:
**FIGURE 1** depicts a contact center system incorporating features of the present application;
**FIGURE 2** depicts a block diagram of the UCC system used in the present invention;
**FIGURE 3** shows a screen shot from the contact center system of the present application;
**FIGURE 4A****(1)-4A(2)** shows chat boxes for a first scenario wherein an agent may request help;
**FIGURE 4B****(1)-4B(2)** shows chat boxes for a second scenario wherein a supervisor may monitor an agent;
**FIGURE 4C****(1)-4C(2)** shows chat boxes for a third scenario wherein the contact center system of the present invention may be used for training;

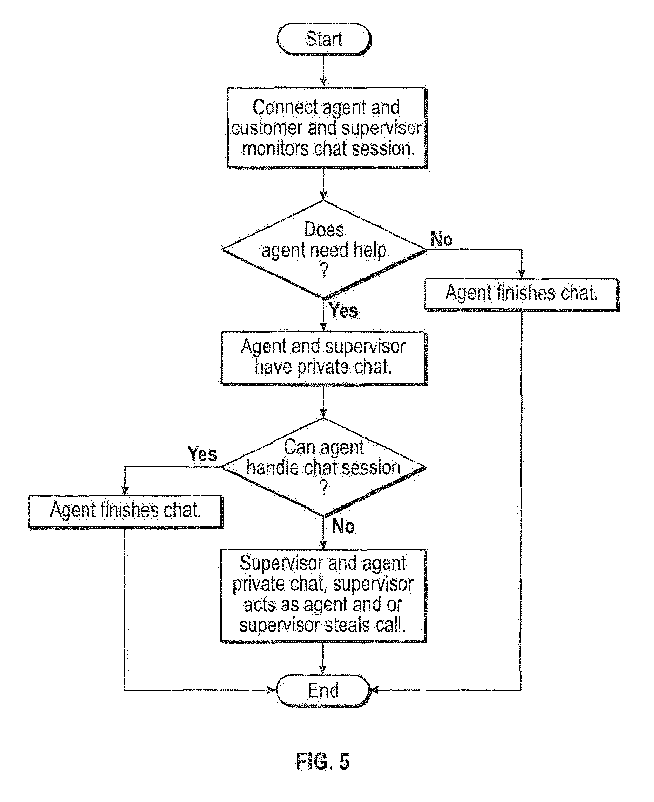

**FIGURE 5** is a flow chart showing operation of the call center system in accordance with one aspect of the present application.

### Description of the Application

The description set forth below in connection with the appended drawings is intended as a description of presently-preferred embodiments of the application and is not intended to represent the only forms in which the present application can be constructed and/or utilized. The description sets forth the functions and the sequence of steps for constructing and operating the application in connection with the illustrated embodiments. It is to be understood, however, that the same or equivalent functions and sequences can be accomplished by different embodiments that are also intended to be encompassed within the scope of this application.

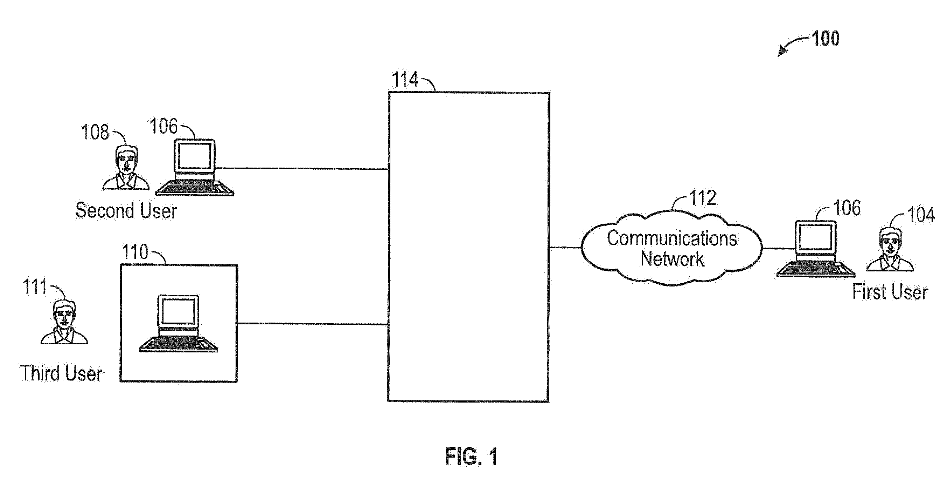

Referring to Figures 1-2, a system 100 for managing a chat session is shown. The system 100 may be designed to manage a chat session between a communication device 102 associated with a first user 104 and a communication device 106 associated with a second user 108. A third communication device 110 may be provided and associated with a third user 111. The communication devices 102, 106 and or 110 may be a computer, a laptop, a tablet, a smartphone, or the like. The above listing is given as an example and should not be seen in a limiting manner. In accordance with some embodiments, the first user 104 may be a customer or potential customer of an entity (e.g. a business, a contact center, etc.), the second user 108 may be an agent associated with the entity (e.g. an agent of a business or a contact center engaged in the chat session), and the third user 111 may also be an agent associated with the entity but in a managerial or trainer role (e.g. a supervisor of the agent of a business or a contact center engaged in the chat session). In another embodiment, the first user 104 may be a customer or an agent posing as a customer for training purposes, the second user 108 may be an agent responsible for handing the chat session, and the third user 111 may be a supervisor responsible for training the second user 108. The above are given as examples and should not be seen in a limiting manner. The first user 104, the second user 108, and or the third user 111 may be other types of users without departing from the scope of the present invention.

The system 100 may have a Unified Communications and Collaboration (UCC) system 114. The UCC system 114 may provide services such as instant messaging (chat), presence information, telephony, video conferencing, data sharing, call control and speech recognition with non-real-time communication services such as unified messaging (integrated voicemail, e-mail, SMS and fax).

The UCC system 114 may be used for managing incoming and outgoing chat sessions of the first user 104, the second user 108 and or the third user 111. The UCC system 114 may be coupled to a communication network 112. The communication network 112 may be used for sending chat session to and from the UCC system 114. The communication network 112 may be a packet based network (e.g., internet), or the like. The above listing is given as an example and should not be seen in a limiting manner. Other types of communication networks 112 may be used without departing from the scope of the present invention.

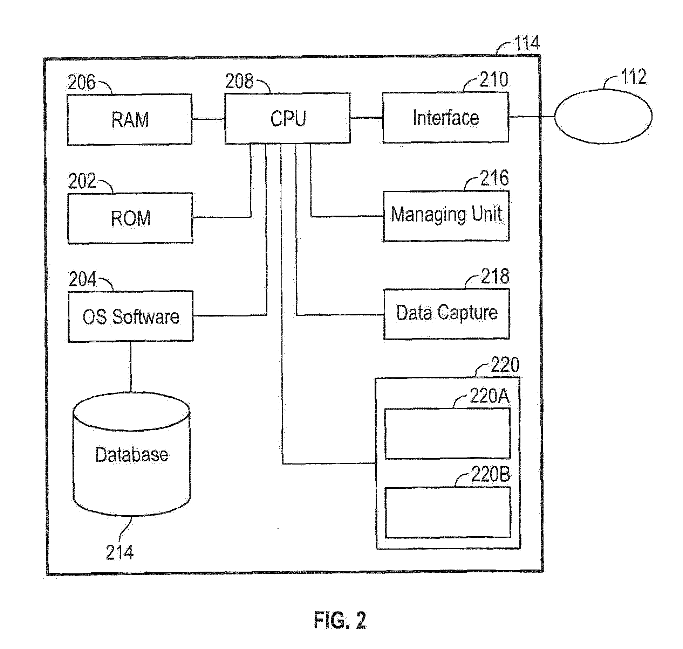

The UCC system 114 may be comprised of hardware and programming for managing incoming and or outgoing chat sessions. As shown in Figure 2, a block diagram depicting illustrative hardware and software of the UCC system 114 in accordance with one or more aspects of the present disclosure is shown. The UCC system 114 typically takes the form of a computer system. The UCC system 114 may include ROM 202, operating system and software instructions 204, RAM 206, at least one central processor (CPU) 208, an interface 210 connected to the communication network 112 and a database 214. A conventional personal computer or computer workstation with sufficient memory and processing capability may be used as the UCC system 114. Alternatively, multiple interconnected servers can also serve as the UCC system 114.

In a specific non-limiting embodiment, the second user 108 comprises a customer service representative or agent of a contact center, and the first user 104 comprises a customer, or a potential customer, engaged in a chat session with the contact center. The UCC system 114 manages the contact center's chat session including, but not limited to, starting the chat session, routing the chat messages to the agent, managing a hold queue, managing a chat queue, and interacting with the first user 104 via a managing unit 216. In this embodiment, the agent may be one of a plurality of agents (not shown), and the UCC system 114 may be connected to a plurality of incoming lines and/or communication networks 112, the UCC system 114 managing a plurality of chat sessions and assigning a chat session to agents based on availability or skill level, as known to one of skill in the art. In general, the chat sessions may be initiated by the first user 104 (i.e. the customer) to the contact center using the communication device 102. However, some chat sessions may be initiated by the contact center to the first user 104. In any event, the UCC system 114 controls the connection of the communication device 102 and to the communication device 106 based on a set of contact center rules, routing rules or the like..

The UCC system 114 may have a data capture unit 218 for capturing chat data. For example, the chat data may comprise a network address associated with the first user 104 for identifying and contacting the first user 104 (for example an IP address of the communication device, an e-mail address of the first user, or a combination). The first user 104 may also have to login to chat or enter a customer number. This information may be used to look up the customer information to provide additional data for the chat (support history, other products they have purchased, etc.) The chat data 218 may further comprise the length of time that the chat session has spent in hold queues, a recording of the chat session, a link to a recording of the chat session, a length of time of the chat session, an identifier of any other users involved in the chat session (e.g. any other contact center employees involved in the chat session), and the like.

The UCC system 114 may further have an interactive communication unit 220. The interactive communication unit 220 may be used to show and record the communication between the first user 104 and the second user 108. The communication unit 220 may be a textual based communication unit where information is typed into a message box, a voice recognition unit which may be used to transcribe verbal communications to text based data, or the like. The communication unit 220 may be comprised of a chat session manager 220A and a chat session interface 220B.

In operation, the UCC system 114 may connect a chat session between the communication device 102 associated with a first user 104 and the communication device 106 associated with a second user 108. The data capture unit 218 may be used for capturing data such as a phone number or IP address of the communication device 102 and to record the length of time that a chat session request has spent in hold queues. This information may then be sent to the communication device 106 of the second user 108.

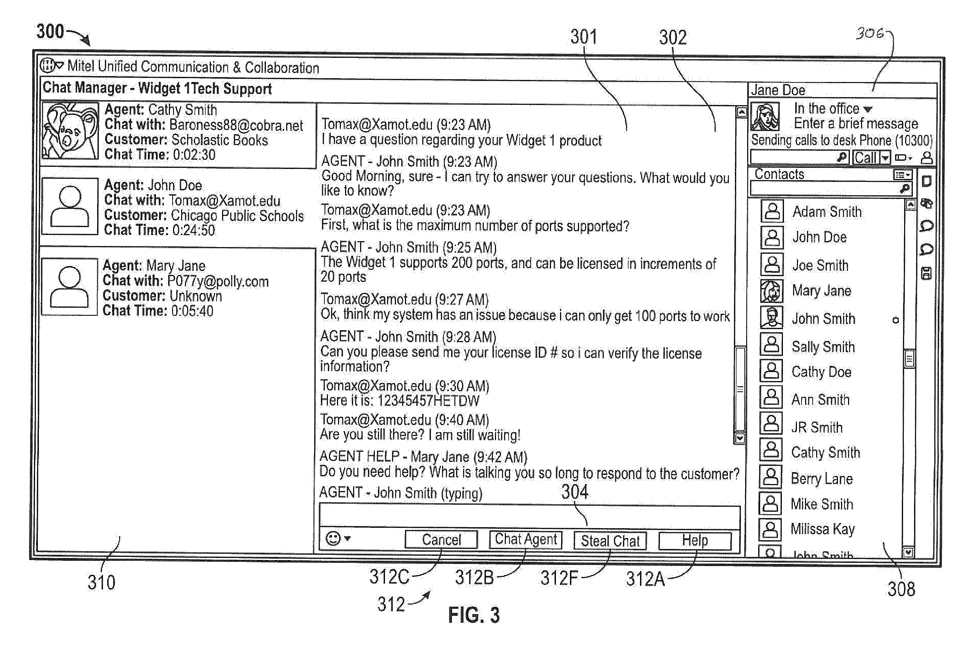

The UCC system 114 may be programmed to provide a screen 300 as shown in Figure 3. The screen 300 may be shown on the communication device 106 of the second user 108 and or the communication device 110 of the third user 111. The UCC system 114 may be programmed so that the screen 300 provides a chat window 301 having a chat box 302. The chat box 302 shows the communication between different parties. The communication may be between the first user 104 and the second user 108; between the second user 108 and the third user 111, between the first user 104, the second user 108 and the third user 111, and or the first user 104 and the third user 111. The above is given as an example. Additional parties may be involved in the communication and displayed in the chat box 302 without departing from the scope of the present invention. The communication shown in the chat box 302 may be a textual based communication wherein text is typed into a chat line 304 and entered and the chat history is shown in the chat box 302. Alternatively, the communication unit 220 may have voice recognition software wherein verbal communication is transcribe to text based data and shown in the chat box 302.

The UCC system 114 may further be programmed so that the screen 300 may have one or more additional windows which display different information. For example, in a contact center scenario, the screen 300 may have a window 306 which show the third user 111 (i.e., supervisor) on duty. The screen 300 may further have a window 308 which may show different contacts of the second user 104 (i.e. contact center agent). The contacts may be different first users 104 (i.e., customers), friends, family or the like. The above listing is given as an example and should not be seen in a limiting manner. The screen 300 may further have a window 310 which may show different second users 108 (i.e. contact center agent) on duty or who may be under the supervision of the third user 111 (i.e., supervisor). It should be noted that Figure 3 shows one embodiment of window 310 that the third user 111 (i.e. supervisor) may like to have. Window 310 may be customizable and provide other views which may allow third user 111 (i.e. supervisor) to monitor desired statistics from that the team the third user 111 (i.e. supervisor) is managing - wait times, call/chat durations, etc.

Located on the screen 300 may be one or more buttons/icons (hereinafter buttons) 312. Each button 312 if selected may be used to execute different functions of the communication device 110. The number of buttons 312 displayed may depend on the user. While the screen 300 of Figure 3 shows buttons 312, other means may be used to select and execute different functions of the communication device 110 such as a pull down menu, bar menu, function icons or the like.

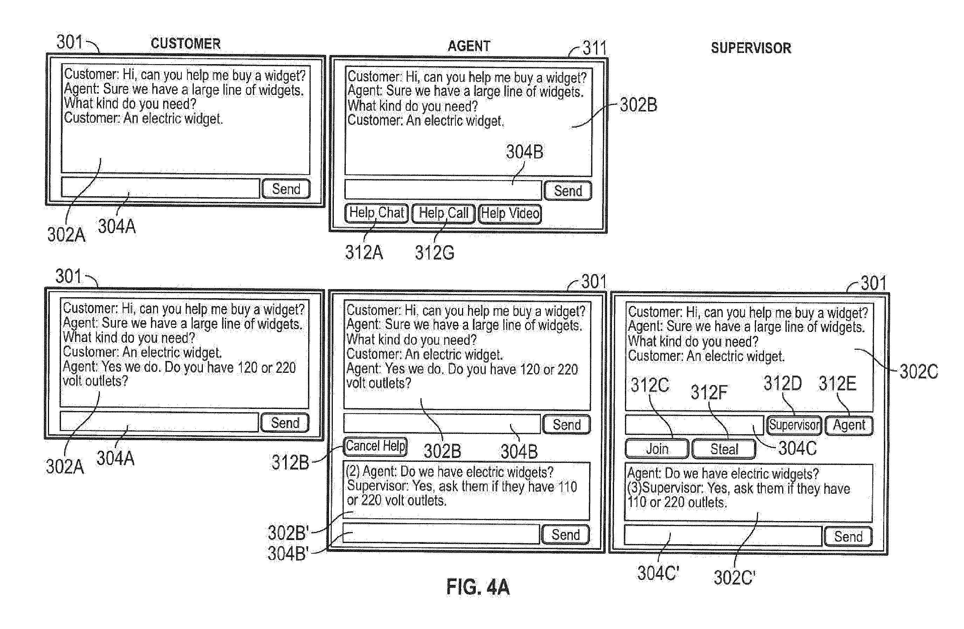

A button 312A may be used to allow the second user 108 to ask for help in the second user's conversation with the first user 104. As shown in Figure 4A(1), in a contact center scenario in which the first user 104 is a customer and the second user 108 is a contact center agent, the second user 108 (i.e. contact center agent) may be in a chat session with the first user 104 (i.e., customer) to help resolve issues the first user 104 (i.e., customer) may be having. In this embodiment, the first user 104 (i.e., customer) has a chat screen 301 having a chat box 302A and a chat line 304A. The second user 108 (i.e., contact center agent) has a chat screen 311 having a first chat box 302B and a first chat line 304B. In some situations, the second user 108 (i.e. contact center agent) may need assistance from a third user 111 (i.e., supervisor). The second user 108 (i.e. contact center agent) may press the button 312A (Help Chat Button). The button 312A (Help Chat Button) may allow the second user 108 (i.e. contact center agent) to have a dialog that allows the second user 108 (i.e. contact center agent) to send full chat history right away, or start chatting with third user 111 (i.e., supervisor) first then send the entire chat history later. In the past in this situation, the second user 108 (i.e. contact center agent) generally needs to open up a new chat box 302 on the communication device 106 of the second user 108 (i.e. contact center agent) in order to talk with the third user 111 (i.e., supervisor). If the third user 111 (i.e., supervisor) needs to review part of the conversation between the second user 108 (i.e. contact center agent) and the first user 104 (i.e., customer), the second user 108 (i.e. contact center agent) generally has to cut and paste a copy of the chat history into the new chat window with the third user 111 (i.e., supervisor).

As shown in Figure 4A(2), when the second user 108 (i.e. contact center agent) presses the button 312A (Help Chat Button), the chat screen 301 may then appear on the communication device 110 of the third user 111 (i.e., supervisor). The third user 111 (i.e., supervisor) may then be able to view the chat history shown in the chat box 302 between the first user 104 (i.e., customer) and the second user 108 (i.e. contact center agent). The third user 111 (i.e., supervisor) may also engage in chat with the second user 108 (i.e. contact center agent) without the first user 104 (i.e., customer) noticing a difference.

In accordance with some embodiments as shown in Figure 4A(2), when the second user 108 (i.e. contact center agent) presses the button 312A (Help Chat Button) a second chat box 302B' and a second chat line 304B' may appear. The second chat box 302B' and a second chat line 304B' may allow the second user 108 (i.e. contact center agent) to have a chat session with the third user 111 (i.e., supervisor). Thus, the second chat box 302B' shows the chat session between the second user 108 (i.e. contact center agent) and the third user 111 (i.e., supervisor). While a pair of chat boxes 302B and 302B' are shown, it should be noted that one chat box 302B and chat line 304B may be used and additional buttons 312 may be added to allow a private chat between the second user 108 (i.e., contact center agent) and the third user 111 (i.e., supervisor). In this embodiment, all chat messages involving the second user 108 (i.e. contact center agent) may be shown in a single chat box 302B whether the chat is with the first user 104 (i.e., customer) or the third user 111 (i.e. supervisor).

When the second user 108 (i.e. contact center agent) presses the button 312A (Help Chat Button) the chat window 301 may appear on the communication device 110 of the third user 111 (i.e., supervisor). The chat window 301 on the communication device 110 of the third user 111 (i.e., supervisor) may have a first chat box 302C and a first chat line 304C which shows the chat history between the first user 104 (i.e., customer) and the second user 108 (i.e., contact center agent). A second chat box 302C' and a second chat line 304C' may appear as well. The second chat box 302C' and the second chat line 304C' may allow the second user 108 (i.e., contact center agent) to have a chat session with the third user 111 (i.e., supervisor). The third user 111 (i.e., supervisor) may chat with the second user 108 (i.e., contact center agent) by entering text into the second chat line 304C' which would be shown in the chat box 302C' or by verbal communication which would be transcribed by the communication unit 220 and then shown in the chat box 302. In this manner, the third user 111 (i.e., supervisor) can assist the second user 108 (i.e., contact center agent) without interrupting the first user 104 (i.e., customer) and can share private information with the second user 108 (i.e., contact center agent). While a pair of chat boxes 302C and 302C' are shown, it should be noted that one chat box 302C and chat line 304C may be used and additional buttons 312 may be added to allow a private chat between the second user 108 (i.e., contact center agent) and the third user 111 (i.e., supervisor). In this embodiment, all chat messages involving the third user 111 (i.e. supervisor) may be shown in a single chat box 302C. Once the third user 111 (i.e., supervisor) has provided help, or if the second user 108 (i.e. contact center agent) does not need the help of the third user 111 (i.e., supervisor), the second user 108 (i.e., contact center agent) may press a button 312B (Cancel Help). While Figure 4A(2) shows the third user 111 (i.e., supervisor) chatting with one the second user 108 (i.e., contact center agent), the third user 111 (i.e., supervisor) may be involved in multiple chat sessions with multiple second users 108 (i.e., contact center agent).

The third user 111 (i.e., supervisor) and the second user 108 (i.e., contact center agent) may have further options. For example, the second user 108 (i.e., contact center agent) may want to fully invite the third user 111 (i.e., supervisor) into the chat session at some point so the second user 108 (i.e., contact center agent) and the third user 111 (i.e., supervisor) can both chat directly with the first user 104 (i.e., customer). Alternatively, the third user 111 (i.e., supervisor) may feel it necessary to join the chat session between the first user 104 (i.e., customer), the second user 108 (i.e., contact center agent). A button 312C (Join) may then be pressed. When the button 312C (Join) is pressed by third user 111 (i.e., supervisor), any conversation between the first user 104 (i.e., customer), the second user 108 (i.e., contact center agent), and or the third user 111 (i.e., supervisor) that occurs after the button 312C (Join) is pressed may be shown in chat boxes 302B and 302C. In the case where both the second user 108 (i.e., contact center agent) and the third user 111 (i.e. supervisor) are chatting with the first user 104 (i.e., customer), the second user 108 (i.e., contact center agent) and the third user 111 (i.e., supervisor) can appear as one agent or as an agent and supervisor depending on their preference per chat. In this scenario, the third user 111 (i.e., supervisor) may have buttons 312D (supervisor) and 312E (agent). Once text has been entered into the chat line 304C, the third user 111 (i.e., supervisor) may press the button 312D (supervisor) to entered text such that the text appears as coming from the third user 111 (i.e., supervisor). Alternatively, once text has been entered into the chat line 304C, the third user 111 (i.e., supervisor) may press the button 312E (agent) to entered text such that the text appears as coming from the second user 108 (i.e., agent). It should be noted that while the button 312C (Join) is shown on the chat window 301 of the third user 111 (i.e., supervisor), the button 312C (Join) may also be on the chat window 301 of the second user 108 (i.e., agent).

There may be situations in which the third user 111 (i.e., supervisor) may wish to take over a conversation between the first user 104 (i.e., customer) and the second user 108 (i.e. contact center agent). In this situation, the third user 111 (i.e., supervisor) may press a button 312F (Steal). By pressing the button 312F (Steal), the third user 111 (i.e., supervisor) may take-over the chat from the second user 108 (i.e., contact center agent) and only chat with the first user 104 (i.e., customer). In this situation, the third user 111 (i.e., supervisor) may appear as either the second user 108 (i.e. contact center agent) or the third user 111 (i.e. supervisor) on the communication device 102 of the first user 104 (i.e., customer) by using the buttons 312D (supervisor) and 312E (agent). If the button 312F (Steal) is pressed by the third user 111 (i.e., supervisor), the second user 108 (i.e., contact center agent) is no longer on the chat, but the first user 104 (i.e., customer) does not know that this has happened. The second user 108 (i.e., contact center agent) may receive a message indicating that the chat was stolen by the third user 111 (i.e., supervisor). If the third user 111 (i.e., supervisor) is available to take a call, the second user 108 (i.e., call center agent) may also want to call the third user 111 (i.e., supervisor) to discuss the conversation with the first user 104 (i.e., customer). In this scenario, a button 312G (Help Call) may be provided. Pressing the button 312G (Help Call) connects the second user 108 (i.e., contact center agent) with the third user 111 (i.e., supervisor) so that the second user 108 (i.e., contact center agent) may verbally discuss the current situation with the third user 111 (i.e., supervisor). In accordance with some embodiments, the communication device 106 of the second user 108 (i.e., contact center agent) and the communication device 110 of the third user 111 (i.e., supervisor) may have features which would allow the second user 108 (i.e., contact center agent) to verbally discuss the current situation with the third user 111 (i.e., supervisor). In order to provide this functionality, the UCC system 114 may use the communication unit 220 to provide this feature.

The screen 300 may have a window 310 which may show different second users 108 (i.e., contact center agent) on duty or who may be under the supervision of the third user 111 (i.e., supervisor). As shown in Figure 3, under each of the different second users 108 listed in window 310, information is displayed relating to the identity of the first user 104 (i.e., customer) as well as the length of time the second user 108 (i.e., contact center agent) has been chatting with the first user 104 (i.e., customer). It should be noted that Figure 3 shows one embodiment of window 310 that the third user 111 (i.e., supervisor) may like to have. Window 310 may be customizable and provide other views which may allow third user 111 (i.e., supervisor) to monitor desired statistics from that the team the third user 111 (i.e., supervisor) is managing - wait times, call/chat durations, etc.

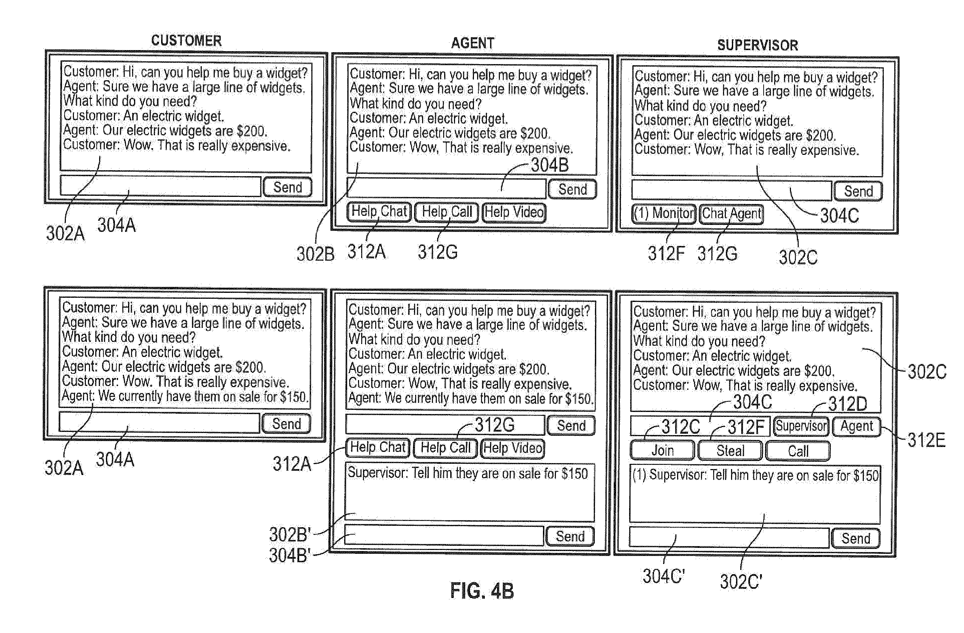

A third user 111 (i.e., supervisor) monitoring the contact center activity may review this information to see if a second user 108 (i.e., contact center agent) is spending too much time with first user 104 (i.e., customer) and to monitor the activity and or productivity of the second users 108 (i.e., call center agent). As shown in Figure 4B(1), the third user 111 (i.e., supervisor) may have a button 312H (Monitor). By pressing the button 312H (Monitor), the third user 111 (i.e., supervisor) may review the chat history between the second user 108 (i.e., contact center agent) and first user 104 (i.e., customer) to determine why a chat session is taking longer than usual.

If the third user 111 (i.e., supervisor) would like to join the chat so only the second user 108 (i.e., call center agent) can see the chat, the third user 111 (i.e., supervisor) may press a button 312I (Chat Agent). The third user 111 (i.e., supervisor) may then assist the second users 108 (i.e., contact center agent) without interrupting and or the first user 104 (i.e., customer) knowing. The third user 111 (i.e., supervisor) and the second user 108 (i.e. contact center agent) may share private information by entering text into a chat line 304B' or 304C' which would be shown in the chat boxes 302B' and 302C' or by verbal communication which would be transcribed by the communication unit 220 and then shown in the chat boxes 302B' and 302C'. The third user 111 (i.e., supervisor) may also use the button 312I (Chat Agent) if the third user 111 (i.e., supervisor) wants to notify the current second user 108 (i.e., call center agent) that the third user 111 (i.e., supervisor) wishes to transfer a chat session to another agent or supervisor. The third user 111 (i.e., supervisor) may want to transfer the chat to a more experienced agent, or maybe someone just got back from break so they want to move the chat to the agent now available.

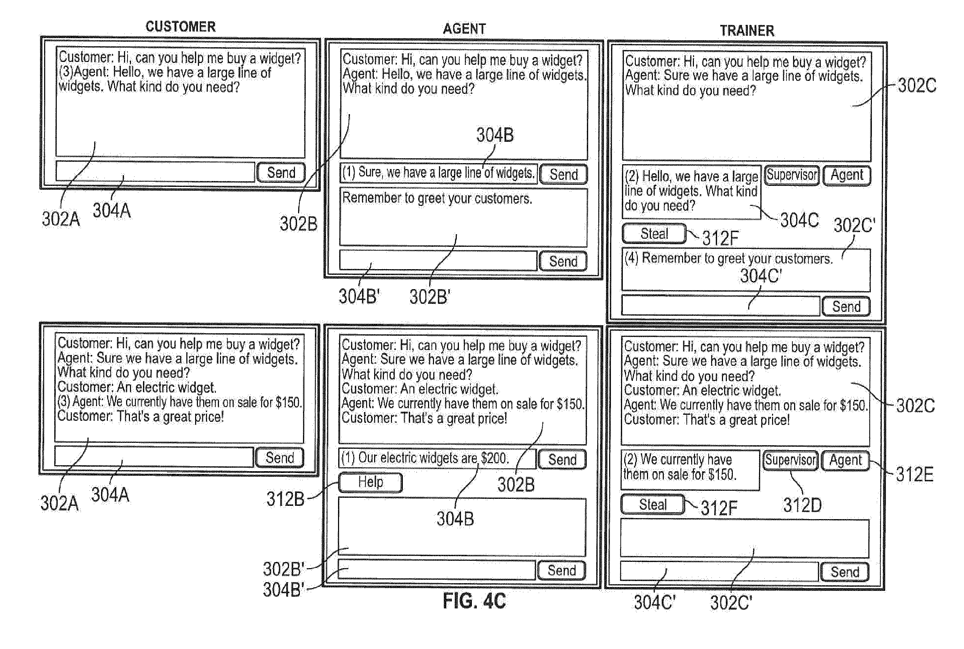

Referring now to Figures 4C(1) and 4C(2), the system 100 may also be used for training. If the second user 108 (i.e., contact center agent) is being trained, the second user 108 (i.e., contact center agent) may want and or need to have all of chat messages approved by the third user 111 (i.e., supervisor) in real-time. In accordance with some embodiments, all chat messages are first sent to the third user 111 (i.e., supervisor/trainer). The third user 111 (i.e., supervisor/trainer) can modify the text or simply send it as the Supervisor or Agent. The second user 108 (i.e., contact center agent) may press the button 312A (Help Button) if the second user 108 (i.e., contact center agent) wishes to chat with the third user 111 (i.e., supervisor/trainer) directly and privately.

The second user 108 (i.e., contact center agent) may have chat boxes 302B and 302B' and chat line 304B and 304B'. The third user 111 (i.e., supervisor) may also have chat boxes 302C and 302C' and chat lines 304C and 304C'. As disclosed above, all chat messages are first sent to the third user 111 (i.e., supervisor/trainer). Thus, the third user 111 (i.e., supervisor) may view the chat history shown in the chat box 302C between the first user 104 (i.e., customer) and the second user 108 (i.e., contact center agent). When the second user 108 (i.e., contact center agent) presses the button 312A (Help Button) the third user 111 (i.e., supervisor) may also engage in chat with the second user 108 (i.e., contact center agent) without the first user 104 (i.e., customer) noticing a difference. Thus, the second user 108 (i.e., call center agent) can enter a chat message; the third user 111 (i.e., supervisor) may view, edit or leave the chat message as is before the chat message is sent it to the first user 104 (i.e., customer). The third user 111 (i.e., supervisor) may further be able to steal the chat from the second user 108 (i.e., call center agent) if needed by pressing the button 312F (Steal). Additionally, if the third user 111 (i.e., supervisor) needs to show the second user 108 (i.e., call center agent) how to find information or do something on their communication device 106, the third user 111 (i.e., supervisor) may need to take control of the second user 108 (i.e., call center agent) communication device 106. The above could also be recorded and stored on the database 214 for future training purposes. Thus, the database 214 may contain the audio, chat, and collaboration in one file that can easily be played back.

The system 100 provides agent-help, silent monitor, and training functionality using a Unified Communication and Collaboration (UCC) call center application that integrates presence, chat, collaboration, and phone functionality. These collaborative sessions can easily be recorded/saved and replayed in the future. The supervisor has the ability to silently monitor the chats, start private chats with the agent, join the chats as either the agent or supervisor, or steal chats with the customer all from one application. The agent can request agent-help, and can chat with the supervisor and customer from one interface. The trainer can view and edit all chats prior to sending to the customer.

While the above was described as it relates to a contact center scenario, the system 100 may be used in other areas such as education and medical fields. In the education field, the teacher assistance could be chatting with students and the professor/lead teacher could be monitoring the chats. In the medical field, the nurse/physician assistant/med student could be chatting with patients and the doctor could be monitoring the chats, and edit or steal the chats as needed. The sessions could all be recorded for future training or legal purposes.

While the invention has been particularly shown and described with reference to the preferred embodiment thereof, it will be understood by those skilled in the art that the foregoing and other changes in form, and details may be made therein without departing from the scope of the invention.

## Claims

1. A contact center system comprising:
a Unified Communication and Collaboration (UCC) device coupled to a communication network for managing incoming and outgoing chat sessions;
wherein the UCC device connects a first user with a second user, the UCC device generating a screen on a communication device of the second user, the screen having a chat window to display communication between the first user and the second user, the screen further having a first function icon which when selected allows a third user to see the chat window and the communication between the first user and the second user.

2. The contact center system of Claim 1, wherein the first function icon which when selected further allows the third user to chat privately with the second user and optionally wherein the screen generated by the UCC device further has a fourth function icon which when selected by the second user ends the chat session with the third user.

3. The contact center system of Claim 1 or claim 2, wherein the screen generated by the UCC device further has a second function icon which when selected allows the first user, the second user and the third user to have communications, wherein the communications between the first user, the second user and the third user are displayed on the chat window.

4. The contact center system of any of Claims 1 to 3, wherein the screen generated by the UCC device further has a third function icon which when selected allows the third user to have communications with the first user only and optionally wherein the third user may appear to be the second user or the third user on a communication device of the first user.

5. The contact center system of any of Claims 1 to 4, wherein the screen further has a contacts window.

6. The contact center system of any of Claims 1 to 5, wherein the screen further has an agent window which shows the third user a plurality of second users currently working and optionally wherein the screen generated by the UCC device further has a fifth function icon which when selected allows the third user to have communications with a selected one of the plurality of second users.

7. The contact center system of any of Claims 1 to 6, wherein the UCC device records and plays back different communications performed on the call center system.

8. A contact center system comprising:
a Unified Communication and Collaboration (UCC) device coupled to a communication network for managing incoming and outgoing chat sessions, the UCC device comprising:
a database for storing communications performed on the call center system;
at least one processor; and
a memory operatively coupled to the processor, the memory storing program instructions that when executed by the processor, causes the processor to:
connect a first user with a second user;
generating a screen on a communication device of the second user, the screen having a chat window to display communication between the first user and the second user, the screen further having a plurality of function icons; and
display the chat window and the communication between the first user and the second user on a communication device of a third user and allow the third user to communicate privately with the second user on the chat window when a first function icon is selected.

9. The contact center system of Claim 8, wherein the memory storing program instructions that when executed by the processor, causes the processor to allow the first user, the second user and the third user to have communications, wherein the communications between the first user, the second user and the third user are displayed on the chat window when a second function icon is selected.

10. The contact center system of Claim 8 or claim 9, wherein the memory storing program instructions that when executed by the processor, causes the processor to allow the third user to have communications with the first user only when a third function icon is selected and optionally wherein the third user may appear to be the second user or the third user on a communication device of the first user.

11. The contact center system of any of Claims 8 to 10, wherein the memory storing program instructions that when executed by the processor, causes the processor to allow the third user to have communications with a selected one of the plurality of second users displayed on the screen when a fourth function icon is selected.

12. In a contact center communication system, a computer-implemented method for managing communications comprising:
connecting a first user with a second user;
generating a screen on a communication device of the second user, the screen having a chat window to display communication between the first user and the second user, the screen further having a plurality of function icons; and
display the chat window and the communication between the first user and the second user on a communication device of a third user and allow the third user to communicate privately with the second user on the chat window when a first function icon is selected.

13. The method of Claim 12, further comprising allowing the first user, the second user and the third user to have communications, wherein the communications between the first user, the second user and the third user are displayed on the chat window when a second function icon is selected.

14. The method of Claim 12 or claim 13, further comprising allowing the third user to have communications with the first user only when a third function icon is selected, the third user appearing to be either the second user or the third user on a communication device of the first user and/or the method further comprising allowing the third user to have communications with a selected one of the plurality of second users displayed on the screen when a fourth function icon is selected.

15. The method of any of Claims 12 to 14, further comprising recording communications between at least two of the first user, the second user, or the third user.
